## Europäisches Patentamt
## European Patent Office
## Office européen des brevets

(19)

(11) Numéro de publication: **0 161 978**
**B1**

(12)
# FASCICULE DE BREVET EUROPÉEN

(45) Date de publication du fascicule du brevet:
**04.11.87**

(51) Int. Cl.⁴: **F 16 L 55/02**

(21) Numéro de dépôt: **85400807.5**

(22) Date de dépôt: **24.04.85**

(54) **Dispositif de support anti-vibratoire d'une tuyauterie dont l'épaisseur est faible par rapport au diamètre.**

(30) Priorité: **27.04.84 FR 8406642**

(43) Date de publication de la demande:
**21.11.85 Bulletin 85/47**

(45) Mention de la délivrance du brevet:
**04.11.87 Bulletin 87/45**

(84) Etats contractants désignés:
**BE DE GB IT LU NL**

(56) Documents cité:
**DE-C-457 644**
**FR-A-2 339 800**
**FR-A-2 514 293**
**GB-A-1 149 757**
**US-A-3 606 218**

(73) Titulaire: **NOVATOME, La Boursidière R.N. 186,
F-92357 Le Plessis Robinson (FR)**

(72) Inventeur: **Force, Christian, 25 route de
Rambouillet, F-91530 St Cheron (FR)**
Inventeur: **Lescure, Alain, 1 rue de la Mare Adam,
F-92370 Chaville (FR)**

(74) Mandataire: **Moncheny, Michel, c/o Cabinet
Lavoix 2 Place d'Estienne d'Orves, F-75441 Paris
Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 161 978 B1

## Description

L'invention concerne un dispositif de support anti-vibratoire d'une tuyauterie dont l'épaisseur est faible par rapport au diamètre.

Dans les réacteurs nucléaires à neutrons rapides, la chaleur produite par le coeur du réacteur est généralement transportée vers les générateurs de vapeur par du sodium liquide circulant dans le circuit secondaire du réacteur. Ce sodium est à une température élevée de l'ordre de 500°, cette température étant susceptible de connaître des variations relativement importantes pendant le fonctionnement du réacteur. Le sodium du circuit secondaire est à une pression faible de l'ordre de quelques bars et circule dans des tuyauteries de grand diamètre dont l'épaisseur est relativement faible par rapport au diamètre. Ces tuyauteries ont par exemple des diamètres supérieurs à un mètre alors que leur épaisseur n'est que de quelques millimètres et au maximum de vingt millimètres. Ceci permet de diminuer la masse d'acier inoxydable nécessaire pour la fabrication du circuit secondaire qui renferme du sodium dont la surpression par rapport à la pression atmosphérique est faible et de réduire les contraintes d'origine thermique.

Les principales contraintes subies par les tuyauteries du circuit secondaire proviennent des chocs thermiques qui peuvent être importants lors de variations rapides de température du sodium liquide, des vibrations dans le circuit secondaire pendant le fonctionnement du réacteur ou même, dans le cas de séismes, de sollicitations cycliques de grande amplitude.

De telles tuyauteries de grand diamètre et de faible épaisseur ont une faible résistance à l'écrasement et peuvent connaître des variations de diamètre importantes résultant des variations de température du sodium qu'elles transportent. Les vibrations ou autres sollicitations cycliques subies par ces tuyauteries peuvent entraîner, en particulier au niveau des points d'ancrage sur l'installation, des dégradations plus ou moins importantes de la tuyauterie et même une destruction de celle-ci.

Il en résulte que le supportage de telles tuyauteries dans une centrale nucléaire pose un problème technique difficile à résoudre.

On a proposé dans le document FR-A-2 558 924 publiée le 2 août 1985 un dispositif de supportage comportant un collier rigide entourant la tuyauterie en ménageant un espace annulaire autour de celle-ci et des secteurs annulaires élastiques et déformables intercalés entre le collier et la surface extérieure de la tuyauterie. Ce dispositif permet un maintien efficace de la tuyauterie tout en lui permettant de se dilater sans induire de contraintes élevées dans sa paroi. Cependant, un tel dispositif ne permet pas d'absorber les vibrations ou autres contraintes cycliques qui sont transmises sans atténuation par les secteurs annulaires élastiques.

Le but de l'invention est donc de proposer un dispositif de support anti-vibratoire d'une tuyauterie dont l'épaisseur est faible par rapport au diamètre et dont la température en service est élevée, comportant un collier entourant la tuyauterie de façon à ménager un espace annulaire autour de celle-ci fixé sur l'installation dans laquelle est montée la tuyauterie et un élément déformable et élastique de forme annulaire intercalé entre le collier et la tuyauterie, dispositif de support qui permette non seulement de maintenir efficacement la tuyauterie tout en lui permettant de se dilater sans induire de contraintes excessives dans sa paroi mais encore d'absorber les vibrations ou contraintes cycliques qui peuvent être transmises à la tuyauterie.

Dans ce but:
- le collier est constitué par au moins deux secteurs annulaires rigides disposés dans le prolongement l'un de l'autre avec un intervalle entre eux, portant à l'une au moins de leurs extrémités des pièces d'articulation complémentaire de pièces portées par le secteur suivant pour constituer une articulation d'axe parallèle à l'axe commun à la tuyauterie et au collier, au moins deux secteurs successifs étant reliés entre eux à l'une de leurs extrémités par un moyen de jonction élastique permettant de fermer le collier,
- et l'élément déformable annulaire intercalé entre le collier et la tuyauterie est constitué par au moins deux secteurs annulaires déformables successifs comportant chacun, à l'intérieur d'un boîtier de maintien fixé sur un secteur du collier et comportant une paroi intérieure d'appui cylindrique de même diamètre que la tuyauterie, une pluralité de coussins parallélépipédiques en fils d'acier inoxydable tricotés, intercalés entre la surface cylindrique intérieure du collier et la paroi intérieure d'appui du boîtier,
- le moyen de jonction élastique du collier permettant d'exercer des forces de direction radiale sur les secteurs annulaires déformables pour leur mise en compression entre le collier et la tuyauterie.

Afin de bien faire comprendre l'invention, on va maintenant décrire, en se référant aux figures jointes en annexe, plusieurs modes de réalisation d'un dispositif de support anti-vibratoire suivant l'invention.

La figure 1 représente une vue en coupe transversale d'une tuyauterie et d'un dispositif de support suivant l'invention et suivant un premier mode de réalisation.

La figure 2 représente une vue suivant A de la figure 1.

La figure 3 est un diagramme de charge de l'élément élastique déformable du dispositif de support représenté aux figures 1 et 2.

La figure 4 est une vue en coupe transversale d'un dispositif de support suivant l'invention et suivant un second mode de réalisation.

La figure 5 est une vue suivant B de la figure 4.

La figure 6 est une vue en coupe transversale d'un dispositif de support suivant l'invention et suivant un troisième mode de réalisation.

La figure 7 est une vue suivant C de la figure 6.

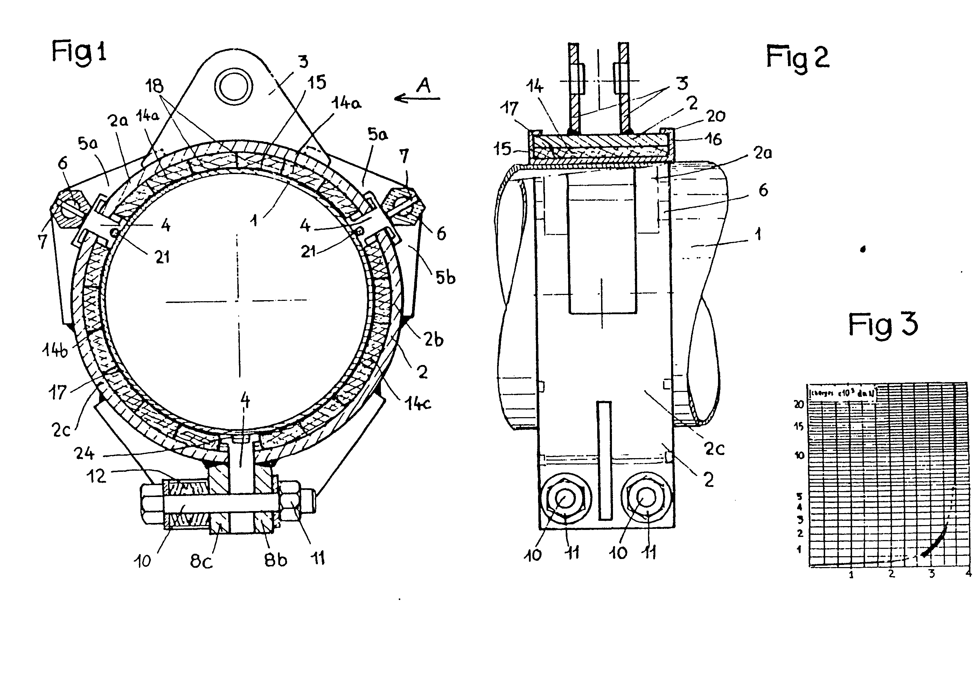

Sur les figures 1 et 2, suivant un premier mode de réalisation, on voit une tuyauterie 1 de transport de sodium liquide dans le circuit secondaire d'un réacteur nucléaire à neutrons rapides. Cette tuyauterie de faible épaisseur et de grand diamètre est fixée sur la structure du réacteur par l'intermédiaire d'un collier 2 et d'une double patte de suspension 3 soudée sur le collier 2.

Le collier 2 est constitué de trois secteurs annulaires rigides 2a, 2b et 2c. Ces secteurs annulaires sont disposés les une à la suite des autres autour de la tuyauterie 1 et coaxialement à celle-ci. Des intervalles 4 sont ménagés entre les extrémités adjacentes de deux secteurs successifs. Le secteur annulaire 2a porte à ses deux extrémités des pattes 5a soudées sur sa surface extérieure et placées dans un plan radial. Ces pattes 5a sont percées d'une ouverture circulaire de direction axiale. Les secteurs 2b et 2c portent à leurs extrémités disposées en vis-à-vis des extrémités du secteur 2a correspondant des pattes 5b et 5c décalées axialement par rapport aux pattes 5a correspondantes. Les pattes 5b et 5c comportent des ouvertures, chaque ouverture étant alignée axialement avec l'ouverture de la patte 5a correspondante, de façon qu'un axe commun 6 puisse être engagé dans les ouvertures en vis-à-vis des deux pattes correspondantes et fixé grâce à une goupille 7. On réalise ainsi l'articulation des secteurs rigides 2a, 2b et 2c, les une par rapport aux autres, avec un axe d'atticulation parallèle à l'axe commun à la tuyauterie 1 et au collier 2.

Les extrémités des secteurs 2b et 2c qui ne sont pas reliées aux secteurs 2a portent des pattes soudées 8b et 8c respectivement percées de deux jeux d'ouvertures alignées dans une direction tangentielle par rapport au collier 2. Deux ensembles identiques constitués chacun par une vis 10, un écrou 11 et un ensemble de rondelles Belleville 12 permettent de relier les deux pattes 8c et 8b et de réaliser une jonction élastique entre les secteurs 2b et 2c du collier 2.

Le dispositif de support comporte également un élément déformable annulaire constitué par trois secteurs annulaires 14a, 14b et 14c disposés chacun entre la surface intérieure d'un secteur rigide du collier 2 (2a, 2b ou 2c) et la surface extérieure de la tuyauterie 1.

Chacun des secteurs annulaires 14 est constitué par un boîtier en tôle mince 15 accroché à chacune de ses extrémités longitudinales sur le secteur rigide du collier 2 correspondant et un ensemble de coussins parallélépipédiques 18 en fils d'acier inoxydable austénitique tricotés. Le boîtier 15 comporte une paroi cylindrique 17 ayant un diamètre égal au diamètre extérieur de la tuyauterie 1 et deux faces latérales annulaires 16 découpées suivant leur bord périphérique pour constituer des pattes d'accrochage 20 du secteur déformable 14 sur le secteur rigide correspondant du collier 2. Lorsque le boîtier 15 est accroché sur le secteur du collier correspondant, la surface cylindrique 17 est coaxiale à la tuyauterie 1.

Les coussins parallélépipédiques 18 sont intercalés les une à la suite des autres suivant la périphérie de la tuyauterie 1, entre la surface intérieure du collier 2 et la surface intérieure de la paroi 17 du boîtier 15. Chacun des coussins parallélépipédiques 18 et les boîtiers 15 ont une longueur, dans la direction axiale de la tuyauterie 1, sensiblement égale à la longueur du collier 2.

Les coussins 18 sont constitués par un fil en acier inoxydable austénitique à 18 % de chrome et 8 % de nickel qui a été tricoté et comprimé pour constituer une masse élastique mais relativement compacte. De tels coussins sont fabriqués et commercialisés par la Société VIBRACHOC.

Pour la mise en place du dispositif de support sur la tuyauterie 1, après accrochage des secteurs annulaires déformables 14 sur les secteurs rigides correspondants du collier 2 et mise en place de ce collier 2 autour de la tuyauterie, on effectue le serrage de l'ensemble autour de la tuyauterie en vissant les écrous 11 des vis 10. On exerce ainsi des forces radiales sur les éléments déformables 14, ces forces radiales étant transmises par les secteurs du collier 2 aux coussins 18 et par ceux-ci à la paroi 17 du boîtier 15 qui vient en appui sur la surface extérieure de la tuyauterie 1. Les coussins 18 sont alors comprimés entre le colliet 2 et la tuyauterie 1.

Avant l'arrivée du sodium dans la tuyauterie 1, on peut mettre celle-ci à sa température de service grâce à des cordons de préchauffage électrique 21 placés dans la direction axiale au contact de la surface extérieure de la tuyauterie 1, entre les secteurs annulaires déformables successifs 2a et 2b et 2a et 2c respectivement.

En outre un cordon de détection du sodium 24 est placé en point bas dans l'intervalle 4.

La dilatation de la tuyauterie 1 est absorbée par la déformation des coussins 18 qui sont comprimés entre la tuyauterie 1 et le collier 2, la dilatation radiale de la tuyauterie 1 étant transmise par les parois cylindriques 17 du boîtier 14.

Sur la figure 3 on voit un diagramme dans lequel la force radiale exercée sur les coussins 18 a été portée en ordonnée et en coordonnées logarithmiques et où la déformation correspondante de ces coussins en compression radiale a été portée en abscisse, dans le cas d'une tuyauterie et d'un dispositif de support tel que représentés aux figures 1 et 2, la tuyauterie ayant un diamètre de 0,90 mètre et les coussins 18 une épaisseur de 0,045 mètre.

Sur le diagramme de la figure 3, la charge radiale est donnée en décaNewtons et la flèche correspondante en $10^{-3}$ mètres. On a représenté par un trait élargi sur la courbe donnant la charge en fonction de la flèche des coussins, la zone de charge utilisée pour la tuyauterie en service, c'est-à-dire après serrage du dispositif de support et mise en température de la tuyauterie 1. Cette zone de charge correspond à la zone de transition de la courbe à partir de laquelle la flèche ou déformation des coussins augmente peu avec la charge. Le dispositif est alors susceptible de maintenir efficacement la tuyauterie, une augmentation importante de la charge se traduisant par une déformation faible de l'élément déformable de support.

A ce niveau de charge, la capacité d'amortissement des coussins 14 est également très forte, si bien que les vibrations ou les contraintes cycliques de grande amplitude qui pourraient être transmises entre l'installation et la tuyauterie sont absorbées en grande partie par les éléments déformables intercalés entre le collier 2 et la tuyauterie 1. Cette absorption d'énergie est produite par le frottement du fil inoxydable sur lui-même dans la structure tricotée comprimée. Le coefficient de frottement de l'acier inoxydable austénitique sur lui-même est en effet élevé et l'absorption d'énergie à ces niveaux de contraintes est elle-même très forte.

Les contraintes transmises à la paroi de la tuyauterie 1 pendant le fonctionnement du réacteur nucléaire, soit sous l'effet des vibrations, de sollicitations externes celles que celles accompagnant un séisme ou de dilatations lors de variations de la température du sodium transporté restent dans des limites acceptables, les coussins déformables 18 absorbant la compression axiale dans la zone de charge sans augmenter la charge radiale de façon excessive tout en amortissant de façon très efficace les sollicitations cycliques par frottement.

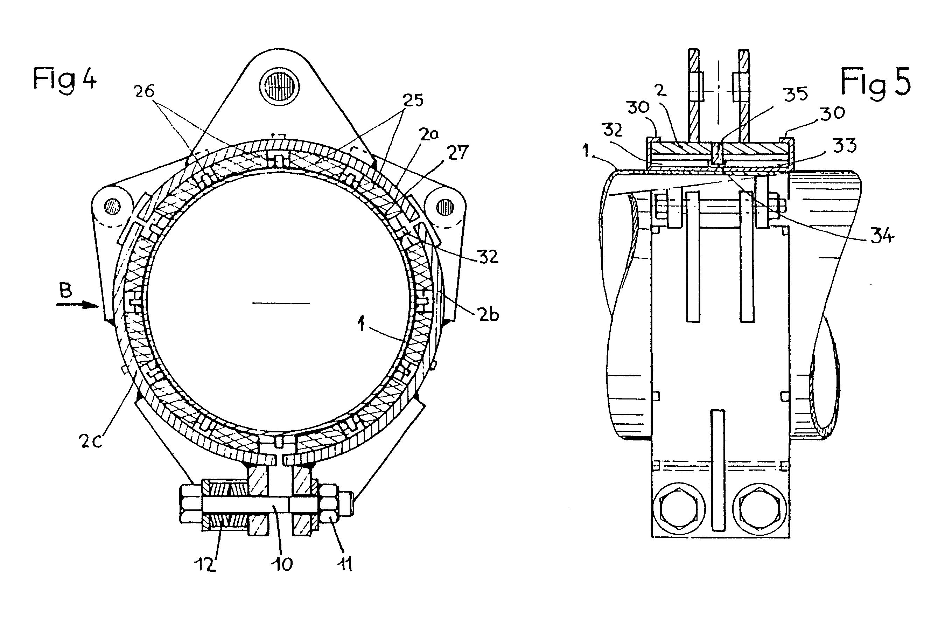

Sur les figures 4 et 5, on a représenté un second mode de réalisation du dispositif de support suivant l'invention, les éléments correspondants sur les figures 4 et 5 d'une part et 1 et 2 d'autre part portant les mêmes repères.

Dans ce mode de réalisation, quatre secteurs annulaires déformables 25 sont disposés les une à la suite des autres avec des intervalles 26 les séparant, sous chacun des secteurs rigides 2a, 2b et 2c du collier 2. Chacun de ces secteurs annulaires 25 comporte une paroi cylindrique 27 de même diamètre que la tuyauterie 1 venant en contact d'appui avec celle-ci lors du serrage du collier 2 grâce à l'ensemble de jonction élastique 10, 11, 12. Ces secteurs annulaires 25 sont accrochés comme précédemment par des pattes 30 repliées vers l'intérieur, aux secteurs correspondants du collier 2.

Dans chacun des intervalles 26 entre deux secteurs annulaires successifs 25 sont disposés deux taquets 32 et 33 soudés sur la surface extérieure de la tuyauterie 1 dans la direction axiale. Entre les taquets 32 et 33 est ménagé un espace 34 à l'intérieur duquel on vient disposer un pion 35 introduit dans une ouverture traversant le collier 2 sur toute son épaisseur. Une disposition semblable pour les douze ensembles de taquets 32 et 33 permet de fixer axialement le dispositif de support par rapport à la tuyauterie 1. On évite ainsi tout déplacement de la tuyauterie par glissement à l'intérieur de son dispositif de support.

Un tel dispositif de blocage axial est particulièrement souhaitable pour une tuyauterie 1 de direction verticale.

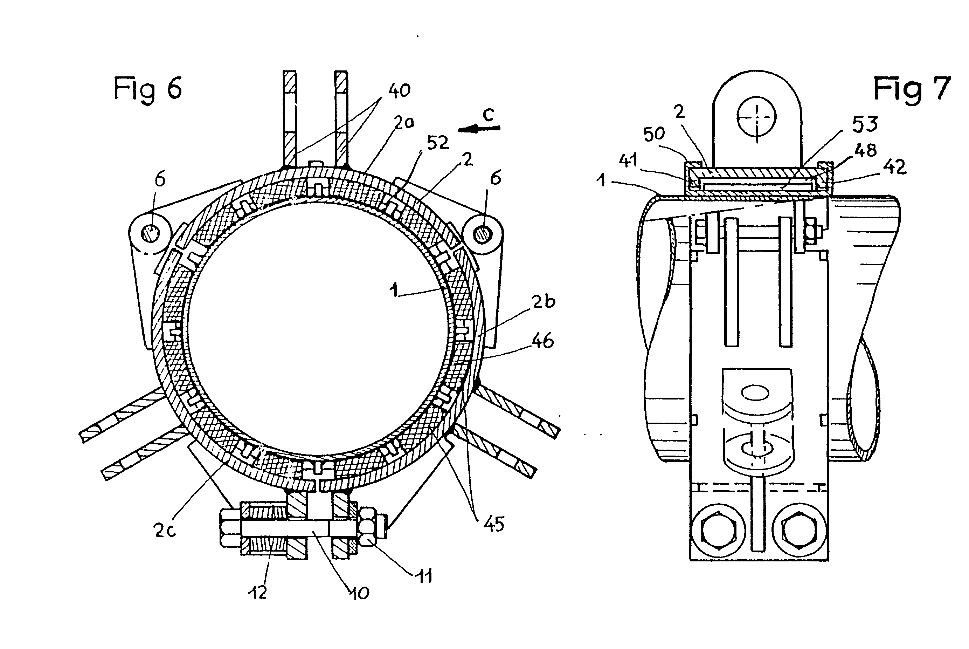

Une telle tuyauterie verticale a été représentée sur les figures 6 et 7 qui montrent un troisième mode de réalisation du dispositif; les éléments correspondant à ceux qui ont été décrits en se référant aux figures 1 et 2 et 4 et 5 portent les mêmes repères sur les figures 6 et 7.

La tuyauterie 1 verticale est disposée à l'intérieur d'un collier 2 dont chacun des trois secteurs 2a, 2b et 2c porte un ensemble de deux pattes de fixation 40. Les secteurs rigides 2b et 2c du collier 2 sont, comme précédemment, articulés autour d'axes de direction axiale 6 sur le secteur 2a et sont reliés à leurs autres extrémités par un ensemble de jonction élastique 10, 11, 12 qui permet de comprimer les secteurs annulaires déformables 45 entre le collier 2 et la tuyauterie 1.

Comme il est visible sur la figure 7, les secteurs rigides du collier 2 comportent deux rebords latéraux 41 et 42 de forme annulaire sur toute leur longueur. Les secteurs rigides du collier 2 comportant les rebords latéraux 41 et 42 ménagent ainsi un espace annulaire 48 entre leur surface intérieure et la surface extérieure de la tuyauterie 1. Les extrémités des rebords 41 et 42 ménagent un jeu entre leur extrémité et la surface extérieure de la tuyauterie 1, si bien que l'espace annulaire 48 n'est pas entièrement fermé.

A l'intérieur de l'espace 48 sont disposés les secteurs annulaires déformables 45 comportant, comme précédemment, un boîtier 46 accroché à ses extrémités sur le collier 2 par des pattes 50 rabattues vers l'intérieur. A l'intérieur de chacun des boîtiers 46 sont juxtaposés des coussins parallélépipédiques en fils d'acier inoxydable tricotés.

Sous chacun des secteurs rigides 2a, 2b, 2c du collier 2 sont disposés quatre secteurs annulaires déformables 45 séparés par des intervalles 52. A l'intérieur de chacun des intervalles 52 est fixée, suivant la direction axiale de l'espace 48, un taquet 53 soudé sur la surface externe de la tuyauterie 1. Le taquet 53 a une longueur un peu inférieure à la dimension dans la direction axiale de l'espace annulaire 48. On obtient ainsi un maintien axial du dispositif de support vis-à-vis de la tuyauterie, par les rebords 41 et 42 des secteurs du collier 2 placés de part et d'autre des extrémités du taquet 53.

Cette disposition est particulièrement utile dans le cas d'une tuyauterie d'axe vertical comme représenté sur la figure 7.

On voit que les principaux avantages du dispositif suivant l'invention sont de permettre une fixation efficace de la tuyauterie tout en autorisant des dilatations radiales de celle-ci. En outre, le dispositif de support suivant l'invention permet d'absorber les vibrations ou autres sollicitations cycliques auxquelles est soumise la tuyauterie pendant le fonctionnement du réacteur ou en cas de séisme.

Enfin, dans des modes de réalisation particuliers, on peut réaliser une fixation axiale de la tuyauterie par rapport à son support.

On peut également utiliser des secteurs annulaires déformables en un nombre différent de ce qui a été décrit dans les exemples de réalisation.

On peut également imaginer un mode de jonction élastique des secteurs rigides du collier différent de celui qui a été décrit.

Le collier peut également servir pour la fixation ou la suspension de la tuyauterie sur les structures du réacteur d'une façon différente de celles qui ont été décrites.

L'accrochage des boîtiers des secteurs annulaires sur le collier peut se faire d'une façon différente de celle qui a été décrite où cet accrochage était assuré par un simple rabattement des rebords des parois latérales du boîtier.

Enfin, le dispositif de support suivant l'invention peut être utilisé non seulement dans le cas des tuyauteries du circuit secondaire d'un réacteur nucléaire à neutrons rapides mais encore dans tous les cas où l'on veut assurer un supportage anti-vibratoire d'une tuyauterie de gros diamètre à paroi mince destinée au transport d'un fluide à température élevée.

**Revendications**

1. Dispositif de support anti-vibratoire d'une tuyauterie (1) dont l'épaisseur est faible par rapport au diamètre et dont la température en service est élevée comportant un collier (2), constitué par au moins deux secteurs annulaires rigides (2a, 2b et 2c) disposés dans le prologement l'un de l'autre avec un intervalle entre eux entourant la tuyauterie (1) de façon à ménager un espace annulaire autour de celle-ci fixé sur l'installation dans laquelle est monté la tuyauterie (1) et un élément déformable et élastique de forme annulaire (14) intercalé entre le collier (2) et la tuyauterie (1),

caractérisé par le fait que les secteurs du collier portent, à l'une au moins de leurs extrémités des pièces d'articulation (5a, 5b, 5c) complémentaires de pièces portées par le secteur suivant pour constituer une articulation d'axe parallèle à l'axe commun à la tuyauterie (1) et au collier (2), au moins deux secteurs successifs (2b, 2c) étant reliés entre eux à l'une de leurs extrémités par un moyen de jonction élastique (10, 11, 12) permettant de fermer le collier (2),

et que l'élément déformable annulaire intercalé entre le collier (2) et la tuyauterie (1) est constitué par au moins deux secteurs annulaires déformables successifs (14), à chaque secteur du collier étant associé au moins un secteur déformable, comportant chacun, à l'intérieur d'un boîtier (15) de maintien fixé sur un secteur du collier (2) et comportant une paroi intérieure d'appui (17) cylindrique de même diamètre que la tuyauterie (1), une pluralité de coussins parallélépipédiques en fil d'acier inoxydable tricoté (18) incercalés entre la surface cylindrique intérieure du collier (2) et la paroi intérieure d'appui (17) du boîtier (15), le moyen de jonction élastique (10, 11, 12) du collier (2) permettant d'exercer des forces de direction radiale sur les secteurs annulaires déformables (14) pour leur mise en compression entre le collier (2) et la tuyauterie (1).

2. Dispositif de support anti-vibratoire suivant la revendication 1,

caractérisé par le fait que les secteurs annulaires déformables (25) sont disposés les une à la suite des autres autour de la tuyauterie (1) en ménageant entre eux des intervalles (26) à l'intérieur de chacun desquels sont fixées par soudage, dans la direction axiale de la tuyauterie, sur la surface externe de celle-ci, deux taquets successifs (32, 33) ménageant un espace (34) dans lequel pénètre l'extrémité d'un pion (35) introduit dans une ouverture traversant le collier (2), l'ensemble du dispositif placé dans les intervalles (26) autour de la tuyauterie maintenant cette tuyauterie (1), axialement par rapport à son dispositif de support.

3. Dispositif de support anti-vibratoire suivant la revendication 1,

caractérisé par le fait que les secteurs rigides (2a, 2b, 2c) du collier (2) comportent des rebords latéraux (41) et (42) limitant latéralement l'espace annulaire (46) ménagé entre la surface intérieure du collier (2) et la surface extérieure de la canalisation (1), les secteurs annulaires (45) étant disposés les une à la suite des autres dans cet espace annulaire (48) en ménageant entre eux des intervalles (46) dans chacun desquels un taquet (53) est fixé par soudage sur la tuyauterie (1) et dans sa direction axiale, ce taquet (53) d'une longueur un peu inférieure à la dimension de l'espace annulaire (48) dans la direction axiale coopérant avec les rebords (41) et (42) des secteurs du collier (2) pour le maintien axial de la tuyauterie par rapport à son dispositif de support.

4. Dispositif de support suivant l'une quelconque des revendications 1, 2 et 3,

caractérisé par le fait que l'un au moins des secteurs rigides (2a, 2b, 2c) du collier (2) porte une patte de suspension ou de fixation (3, 40) de la tuyauterie sur l'installation dans laquelle elle est montée.

5. Dispositif de support suivant l'une quelconque des revendications 1, 2, 3 et 4,

caractérisé par le fait que le collier (2) est constitué par trois secteurs rigides (2a, 2b, 2c).

**Patentansprüche**

1. Vorrichtung zur schwingungsdämpfenden Halterung eines Rohrs (1), dessen Dickenabmessung im Verhältnis zum Durchmesser klein ist und dessen Betriebstemperatur hoch ist, umfassend einen Ring (2), der durch wenigstens zwei in der Verlängerung voneinander mit einem Zwischenraum zwischen ihnen angeordnete steife Ringbogenstücke (2a, 2b, 2c) gebildet ist, das Rohr (1) auf eine Weise umgibt, daß ein Ringraum um dieses ausgespart ist, auf der Vorrichtung befestigt ist, in der das Rohr (1) angebracht ist, und ein deformierbares und elastisches Element (14) mit Ringform, das zwischen dem Ring (2) und dem Rohr (1) eingeschoben ist,

dadurch <u>gekennzeichnet</u>,

daß die Bogenstücke des Rings an wenigstens einem ihrer Enden Gelenkstücke (5a, 5b, 5c) tragen, die zu durch das folgende Bogenstück getragenen Stücken komplementär sind, um ein Gelenk mit zu der dem Rohr (1) und dem Ring (2) gemeinsamen Achse parallelen Achse zu bilden, wobei wenigstens zwei aufeinanderfolgende Bogenstücke (2b, 2c) untereinander an einem ihrer Enden durch ein elastisches Verbindungsmittel (10, 11, 12) verbunden sind, das das Schließen des Rings (2) gestattet, und daß das zwischen dem Ring (2) und dem Rohr (1) eingeschobene deformierbare Ringelement durch wenigstens zwei aufeinanderfolgende, deformierbare Ringbogenstücke (14) gebildet ist, wobei jedem Bogenstück des Rings wenigstens ein deformierbares Bogenstück zugeordnet ist, das jeweils auf der Innenseite eines Halterungsgehäuses (15), das auf einem Bogenstück des Rings (2) befestigt ist und eine zylindrische innere Auflagewand (17) mit demselben Durchmesser wie das Rohr (1) aufweist, eine Anzahl von Parallelepipedkissen aus nichtoxydierendem, gewirktem Stahldraht (18) aufweist, die zwischen der zylindrischen Innenseite des Rings (2) und der inneren Auflagewand (17) des Gehäuses (15) eingeschoben sind, wobei das elastische Verbindungsmittel (10, 11, 12) des Rings (2) es gestattet, Kräfte mit radialer Richtung auf die deformierbaren Ringbogenstücke (14) zu deren Unterdrucksetzung zwischen dem Ring (2) und dem Rohr (1) auszuüben.

2. Vorrichtung zur schwingungsdämpfenden Halterung nach Anspruch 1, dadurch <u>gekennzeichnet</u>, daß die deformierbaren Ringbogenstücke (25) eines nach dem anderen um das Rohr (1) angeordnet sind, indem zwischen ihnen Abstände (26) ausgespart sind, in deren Inneren jeweils in der axialen Richtung des Rohrs auf dessen Außenfläche zwei aufeinanderfolgende Stoppelemente (32, 33) durch Schweißen befestigt sind, die einen Raum (34) aussparen, in den das Ende eines in eine den Ring (2) durchquerende Offnung eingeführten Metallstücks (35) eindringt, wobei der in Abständen (26) um das Rohr angebrachte Aufbau der Vorrichtung dieses Rohr (1) in bezug auf seine Halterungsvorrichtung axial hält.

3. Vorrichtung zur schwingungsdämpfenden Halterung nach Anspruch 1, dadurch <u>gekennzeichnet</u>, daß die steifen Bogenstücke (2a, 2b, 2c) des Rings (2) seitliche Randleisten (41) und (42) aufweisen, die den zwischen der Innenfläche des Rings (2) und der Außenfläche der Rohrleitung (1) ausgesparten Ringraum (48) seitlich begrenzen, wobei die Ringbogenstücke (45) aufeinanderfolgend in diesem Ringraum (48) angeordnet sind, wobei zwischen ihnen Abstände (46) ausgespart sind, in dem jeweils ein Stoppelement (53) durch Schweißen auf dem Rohr (1) und in dessen axialer Richtung befestigt ist, wobei dieses Stoppelement (53) mit einer Länge, die etwas geringer als die Abmessung des Ringraums (48) in der axialen Richtung ist, mit den Randleisten (41) und (42) der Bogenstücke des Rings (2) zur axialen Halterung des Rohrs in bezug auf dessen Halterungsvorrichtung zusammenwirkt.

4. Halterungsvorrichtung nach einem beliebigen der Ansprüche 1, 2 und 3, dadurch <u>gekennzeichnet</u>, daß wenigstens eines der steifen Bogenstücke (2a, 2b, 2c) des Rings (2) einen Aufhängungs- oder Befestigungshalter (3, 40) für das Rohr auf der Vorrichtung trägt, in der es angebracht ist.

> 5. Halterungsvorrichtung nach einem beliebigen der Ansprüche 1, 2, 3 und 4, dadurch <u>gekennzeichnet</u>, daß der Ring (2) durch drei steife Bogenstücke (2a, 2b, 2c) gebildet ist.

**Claims**

An anti-vibratory support device for a pipe whose thickness is small relative to its diameter and whose operating temperature is elevated, said device comprising a collar (2) comprising at least two rigid annular sectors (2a, 2b and 2c) disposed in the extension of one another in spaced relation so as to define a gap therebetween, surrounding the pipe (1) in such manner as to define an annular space around the pipe, fixed to an installation in which the pipe (1) it to be mounted, and a deformable and elastic annular means (14) interposed between the collar (2) and the pipe (1), characterized by the fact that the sectors of the collar carry at at least one of their ends, articulation means (5a, 5b, 5c) complementary to articulation means carried by the following rigid sector, so as to constitute an articulation having an articulation axis parallel to an asis common to the pipe (1) and the collar (2), an elastic junction means (10, 11, 12) interconnecting at least two successive rigid sectors (2b, 2c) at one end of the rigid sectors and enabling the collar (2) to be closed, and that the deformable annular means interposed between the collar (2) and the pipe (1) comprise at least two successive deformable annular sector structures (14), at least one deformable sector being associated to each sector of the collar, comprising each, in the interior of a maintaining case (15) fixed to a rigid sector of the collar (2) and having a cylindrical inner bearing wall (17) having the same diameter at the pipe (1), a plurality of parallelepipedic pads made from knitted stainless steel wire interposed between the inner cylindrical surface of the collar (2) and said inner bearing wall (17) of the case (15), said elastic junction means of the collar permitting the exertion of forces of radial direction on the deformable annular sectors (14) so as to put them under compression between the collar (2) and the pipe (1).

2. An anti-vibratory support device according to claim 1, characterized by the fact that said deformable annular sectors (25) are disposed in successive relation around the pipe (1) and define therebetween gaps inside each of which gaps are fixed by welding, in the axial direction of the pipe (1) on an outer surface of the pipe (1), two successive strips (32, 33) defining a space (34) in which the end portion of a pin (35) is inserted in a throughway opening in the collar (2), the whole of the means placed in the gaps (26) around the pipe maintaining the pipe (1) axially relative to its support device.

3. An anti-vibratory support device according to claim 1, characterized by the fact that said rigid sectors (2a, 2b, 2c) of the collar (2) have lateral flanges (41) and (42) which laterally limit the annular space (48) formed between the inner surface of the collar (2) and the outer surface of the pipe (1), the deformable annular sectors (45) being disposed in successive relation in said annular space (48) and defining therebetween gaps (46) in each of which gaps a strip (53) is fixed by welding to the pipe (1) extending axially of the pipe, said strip (53) having a length a little less than the dimension of said annular space (48) axially of the pipe, cooperating with said flanges (41) and (42) of the sectors of the collar (2) so as to axially maintain the pipe relative to its support device.

4. A support device according to anyone of claims 1, 2 and 3, characterized by the fact that at least one of the rigid sectors (2a, 2b and 2c) of the collar (2) carries a lug (3, 40) for fixing the pipe relative to the installation in which it is to be mounted.

5. A support device according to anyone of claims 1, 2, 3 and 4, characterized by the fact that the collar (2) comprises three rigid sectors (2a, 2b, 2c).

Fig 1

Fig 2

Fig 3

0 161 978

Fig 5

Fig 4

Fig 6

Fig 7

40

2a

C

52

6

2

6

1

2b

46

2c

45

12

10

11

50

2

53

41

48

42

1

0 161 978